# EUROPÄISCHE PATENTANMELDUNG

(11) **EP 1 333 170 A2**
(43) Veröffentlichungstag der Anmeldung: **06.08.2003**
(21) Anmeldenummer: 02020200.8
(22) Anmeldetag: 10.09.2002
(51) Int. Cl.: F02D 41/22, F01N 3/00, F02D 41/02

(54) **Elektronischer Vertauschschutz von Abgasmessonden in einer abgasnachbehandelnden Brennkraftmaschine insbesondere eines Kraftfahrzeugs**

(30) Priorität: 30.01.2002 DE 10203728
(71) Anmelder: ROBERT BOSCH GMBH, 70442 Stuttgart (DE)
(72) Erfinder: Posselt, Andreas, 75417 Muehlacker (DE)

(57) **Zusammenfassung**

Bei einem Verfahren und einer Schaltung zum Einbauvertauschschutz wenigstens zweier Messsonden (28, 30) zur Erfassung physikalisch/chemischer Größen eines Abgases in einer Einrichtung (10) zur Abgasnachbehandlung in einer Brennkraftmaschine insbesondere eines Kraftfahrzeuges, ist vorgesehen, dass Spannungssignale (U_LSF1, U_LSF2) der wenigstens zwei Messsonden (28, 30) eingelesen werden, dass die eingelesenen Spannungssignale digitalisiert und die digitalisierten Spannungswerte zwischengespeichert werden, dass die zwischengespeicherten Spannungswerte jeweils in Kopie zwischengespeichert werden, dass die in Kopie zwischengespeicherten Spannungswerte anhand charakteristischer Spannungsgrößen ausgewertet werden und dabei geprüft wird, ob eine Vertauschung der wenigstens zwei Messsonden (28, 30) vorliegt, und dass, in Abhängigkeit von dem Prüfergebnis, die zwischengespeicherten Spannungswerte jeweils kreuzweise als Kopien zwischengespeichert werden.

## Beschreibung

Die Erfindung bezieht sich allgemein auf in Brennkraftmaschinen insbesondere von Kraftfahrzeugen eingesetzte Einrichtungen zur Abgasnachbehandlung und im Besonderen auf ein Verfahren, eine Schaltung sowie ein Steuergerät zum Schutz gegen die Einbauvertauschung von Abgasmesssonden in einer solchen Einrichtung gemäß den Oberbegriffen der jeweiligen unabhängigen Ansprüche.

Einrichtungen zur Abgasnachbehandlung in Kraftfahrzeugen sind vielfach bekannt. So ist eine Lambdaregelung, in Verbindung mit einem Katalysator, heute das wirksamste Abgasreinigungsverfahren für den Ottomotor. Im Zusammenspiel mit heute verfügbaren Zünd- und Einspritzsystemen können sehr niedrige Abgaswerte erreicht werden. In den meisten Ländern schreiben die Gesetzgeber sogar Grenzwerte für das Motorabgas vor.

Besonders wirkungsvoll ist der Einsatz eines Dreiwegeoder Selektiv-Katalysators. Dieser Katalysatortyp hat die Eigenschaft, Kohlenwasserstoffe, Kohlenmonoxid und Stickoxide bis zu mehr als 98% abzubauen, falls der Motor in einem Bereich von etwa 1% um das stöchiometrische Luft-Kraftstoff-Verhältnis mit Lambda = 1 betrieben wird. Dabei gibt Lambda an, wieweit das tatsächliche vorhandene Luft-Kraftstoff-Gemisch von dem Wert Lambda = 1 abweicht, der einem zur vollständigen Verbrennung theoretisch notwendigen Massenverhältnis von 14,7 kg Luft zu 1 kg Benzin entspricht, d.h. Lambda ist der Quotient aus zugeführter Luftmasse und theoretischem Luftbedarf.

Bei der Lambdaregelung wird grundsätzlich das jeweilige Abgas gemessen und die zugeführte Kraftstoffmenge entsprechend dem Messergebnis bspw. mittels des Einspritzsystems sofort korrigiert. Als Messfühler kommen entweder sogenannte Lambda-Sprungsonden (Zweipunktsonden) zum Einsatz, die exakt bei Lambda = 1 einen Spannungssprung aufweisen und so ein Signal liefern, das anzeigt, ob das Gemisch fetter oder magerer als Lambda = 1 ist. Daneben kommen Lambdasonden zum Einsatz, welche ein stetiges Lambdasignal um Lambda = 1 bereitstellen, das wie im Falle der Lambda-Sprungsonden anzeigt, ob das Gemisch fetter oder magerer als Lambda = 1 ist. Die Wirkung aller Lambdasonden beruht in an sich bekannter Weise auf dem Prinzip einer galvanischen Sauerstoff-Konzentrationszelle mit einem Festkörperelektrolyten (meist Zirkon-Dioxid).

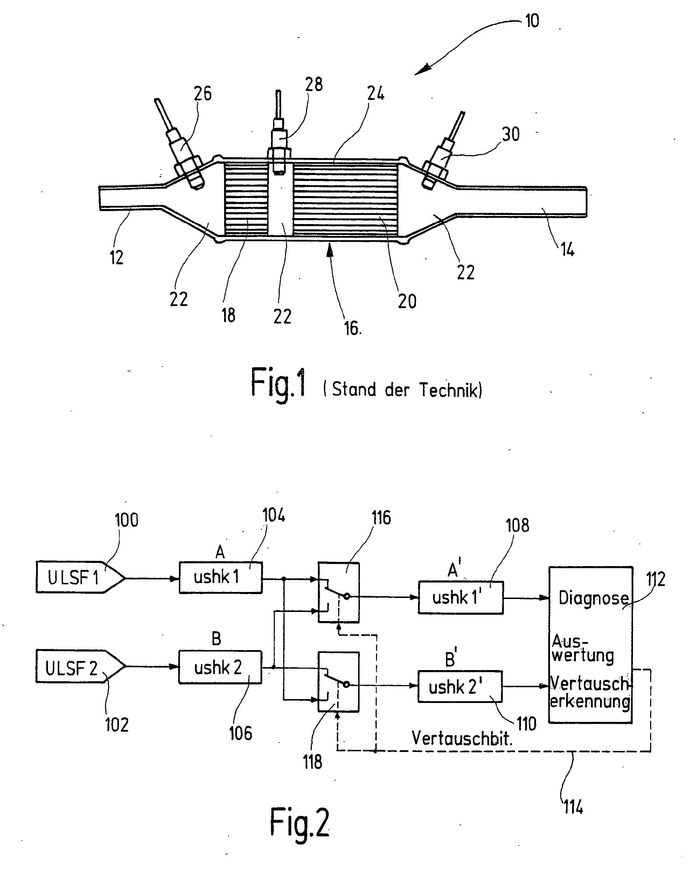

Zur genannten Katalyse werden häufig sogenannte "geteilte" Katalysatoranlagen eingesetzt, die aus einem Vor-Katalysator (Vorkat) und einem Haupt-Katalysator (Hauptkat) gebildet sind. Ein gängiger Bautyp ist die in der Fig. 1 dargestellte, nach einem 3-Sonden-Prinzip arbeitende Katanlage für sehr strenge Abgasgrenzwerte. Diese Katanlagen enthalten insbesondere eine Erkennung, falls die beiden vor und nach dem Hauptkat angeordneten LSF-Sonden vertauscht werden. Diese Erkennung gibt zwar im Falle irrtümlich vertauscht eingebauter Sonden durch Generierung eines elektronischen Fehlerbits eine Fehlermeldung aus, ermöglicht jedoch nicht die Vornahme von Eingriffen zur Kompensation einer solchen Vertauschung.

Die beschriebenen Anlagen zur Abgasnachbehandlung haben daher den Nachteil, dass im Falle einer Vertauschung der genannten Sonden bzw. deren Steckerverbindungen allein mit einer Fehlermeldung reagiert wird, die Katanlage jedoch ihre Aufgabe nicht mehr erfüllen kann.

Der vorliegenden Erfindung liegt daher die Aufgabe zugrunde, ein Verfahren, eine Schaltung und ein Steuergerät zum Betrieb einer eingangs genannten Einrichtung zur Abgasnachbehandlung in einer Brennkraftmaschine insbesondere eines Kraftfahrzeuges anzugeben, welche eine Erkennung einer etwa vorliegenden Einbauvertauschung von Abgasmesssonden in der eingangs genannten Art sowie gleichermaßen eine Behebung der vorliegenden Vertauschung dieser Sonden ermöglichen, so dass die Einrichtung zur Abgasnachbehandlung unterbrechungsfrei weiterarbeiten kann.

Die Aufgabe wird gelöst durch die Merkmale des unabhängigen Anspruchs 1. Vorteilhafte Weiterbildungen sind Gegenstand der Unteransprüche.

Die Erfindungsidee liegt in der Bereitstellung eines elektronischen Vertausch-Schutzes, der im Falle einer Vertauschungserkennung Steuergerät-intern zwischen den Signalen der vertauschten Messsonden umschaltet. Bevorzugt wird sich dabei ein von einer Diagnoseeinheit bereitgestelltes Vertauschbit zunutzte gemacht.

Die Erfindung ermöglicht somit einen sicheren elektronischen Vertauschschutz in einem Motorsteuergerät; das Katsystem reagiert nicht mit einer Fehlermeldung, sondern arbeitet fehlerfrei weiter. Die vorgeschlagene Vertauscherkennung erkennt nicht nur ein Vertauschen der beiden LSF-Sonden, sondern kompensiert auch die Vertauschung, so dass das Motorsteuergerät und der Motor ohne Störung und Funktionsunterbrechung weiterarbeiten können. Die Robustheit der Katsteuerung wird erhöht und damit auch die Alltagstauglichkeit und Qualität der Katanlage.

Darüber hinaus wird durch die Erfindung ein mechanischer Verpolschutz, bspw. mittels einer Steckerkodierung, eingespart.

Das erfindungsgemäße Verfahren wird bevorzugt mittels eines in das Motorsteuergerät geladenen Steuerprogramms implementiert, wodurch kostenaufwändige Hardware-Modifikationen an dem Motorsteuergerät bzw. der Katanlage vermieden werden.

Die Erfindung wird nachfolgend, unter Hinweis auf die Zeichnung, anhand eines bevorzugten Ausführungsbeispiels eingehender erläutert. Dabei zeigen
- Fig. 1: in seitlicher Schnittansicht, eine Katanlage mit 3-Sonden-Konzept nach dem Stand der Technik und
- Fig. 2: in Blockdarstellung, eine elektronische Schaltung zum Schutz gegen die Einbauvertauschung von Abgasmesssonden in einer solchen Katanlage, gemäß der Erfindung.

In der Fig. 1 ist eine im Stand der Technik bei SU-LEV(Super Ultra Low Emissions Vehicles)-Kraftfahrzeugen meist eingesetzte "geteilte" Katalysatoranlage (Katanlage) 10 in seitlicher Schnittansicht dargestellt. Zur Vereinfachung der Darstellung ist hier die erforderliche Steuerelektronik nicht gezeigt.

Die Katanlage 10 weist, in an sich bekannter Weise, einen im Bereich zwischen einem Abgaszuführrohrteil 12 und einem Abgasabführrohrteil 14 angeordneten Katalysatortopf 16 auf, in dem ein Vor-Katalysator (Vorkat) 18 und ein Haupt-Katalysator (Hauptkat) 20 angeordnet sind. Der Vorkat 18 und der Hauptkat 20 sind in dem Ausführungsbeispiel jeweils aus in einer Drahtgestricklagerung 22 eingebettetem, monolithischen Material gebildet. Die Drahtgestricklagerung 22 ist von einem Metallgehäuse 24 umgeben.

Die in der Fig. 1 dargestellte SULEV-Katanlage arbeitet nach einem 3-Sonden-Konzept, d.h. einer sogenannten "kaskadierten Lambdaregelung" mit jeweils vor dem Vorkat 18, nach dem Vorkat 18 bzw. vor dem Hauptkat 20 und hinter dem Hauptkat 20 angeordneten Lambdasonden 26-30. Bei der Sonde 26 handelt es sich um eine von der Firma Robert Bosch entwickelte planare Breitband (Universal-)Lambda-Sonde ("LSU"-Sonde), der hier die Funktion einer Regelsonde innerhalb eines (nicht gezeigten) Lambda-Regelungskreises zukommt.

Bei den beiden anderen Sonden 28, 30, vorliegend mit den Typbezeichnungen "LSF1" und "LSF2", die in den Zwischenraum zwischen dem Vorkat 18 und dem Hauptkat 20 bzw. den bestehenden Raum hinter dem Hauptkat 20 hineinragen, handelt es sich um ebenfalls an sich bekannte sogenannte Führungssonden, die beide funktional gleichartig aufgebaut sind, denen aber innerhalb des (nicht gezeigten) Lambda-Regelkreises unterschiedliche Funktionen zukommen. So dienen sie der Diagnose des jeweils vorgelagerten Katalysators bzw. der jeweils vorgelagerten Sonde.

Bei diesen Sonden 26 - 30, insbesondere der LSU-Sonde 26, handelt es sich in dem Beispiel um planare Zweizellen-Grenzstrom-Sonden. Die beiden wichtigsten Komponenten der Sonden 26 - 30 sind bekanntermaßen eine Nernst-Konzentrationszelle und eine Pumpzelle, welche Sauerstoffionen transportiert. Der modulare Aufbau der Sonde erlaubt, in Verbindung mit der Planartechnik, die Integration mehrerer Funktionen. Die Sonden 26 - 30 werden in an sich bekannter Weise als Abgas-Messsonden in der Abgasanlage verbaut. Mit Hilfe einer (nicht gezeigten) Auswerteschaltung werden jeweils der Pumpstrom der Sonden 26 - 30 und der jeweils aktuelle Sondeninnenwiderstand erfasst. Diese Sonden 26 - 30 sind individuell abgeglichen; ihre Messgenauigkeit, auch am stöchiometrischen Punkt (Lambda = 1) erreichen sie durch den Einsatz eines Kompensationsmessverfahrens.

Aufgrund ihrer Baugleichheit besteht eine erhöhte Wahrscheinlichkeit eines vertauschten Einbaus der beiden Sonden 28, 30 (LSF1 und LSF2) bzw. einer Vertauschung der jeweiligen elektrischen Steckerverbindungen. Aufgrund ihrer unterschiedlichen Funktion tritt im Falle einer solchen Vertauschung ein fataler Funktionsfehler des Lambda-Regelkreises auf.

Es ist anzumerken, dass die anhand der Fig. 1 beschriebene Katanlage 10 u.a. auch bei Magermotoren zum Einsatz kommen kann. Bei diesen Motoren wird Kraftstoff direkt in den Brennraum eingespritzt und dadurch besser genutzt, was in niedrigerem Kraftstoffbedarf bei gleichzeitig leicht erhöhter Motorleistung resultiert. Allerdings erfordern diese Direkt-Einspritzmotoren eine aufwendigere Abgasnachbehandlung. In diesem Fall ist der Hauptkat 20 als NOx-Speicherkat ausgeführt. Für die laufende Messung der Abgaswerte werden daher in solchen Fahrzeugen die vorgenannten, besonders leistungsfähigen Sondentypen verwendet. Die linearen Sonden setzen zudem eine relativ komplexe, integrierte Schaltung in der Motorsteuerung voraus.

Ferner ist zu erwähnen, dass diese Sonden 26 - 30, neben dem Einsatz in Magermotoren, zunehmend auch bei den bereits beschriebenen SULEV-Fahrzeugen eingesetzt werden. Darüber hinaus werden bereits Einsatzmöglichkeiten in von Rußpartikeln gereinigten Dieselmotoren entwikkelt, da diese Sonden auch hier eine bessere Steuerung der Kraftstoffeinspritzung erlauben und so, in Verbindung mit weiteren Katalysatoren und Sensoren, den NOx-Ausstoß zu minimieren gestatten.

Die Fig. 2 zeigt ein Blockdiagramm einer elektronischen Schaltung zum Schutz gegen die Einbauvertauschung der genannten LSF-Sonden 28, 30. Die Schaltung weist Mittel 100, 102 zum Einlesen der von den beiden LSF-Sonden 28, 30 jeweils gelieferten Spannungssignale U_LSF1 und U_LSF2 auf. Die eingelesenen Spannungssignale werden mittels eines (nicht gezeigten) Analog/Digital-Wandlers in an sich bekannter Weise aufbereitet, d.h. ggf. normiert und anschließend digitalisiert. Die Schaltung weist ferner erste Speicherzellen 104, 106 (A und B) auf, in welche die digitalisierten Spannungswerte als Werte 'ushk1' und 'ushk2' abgelegt und dort zwischengespeichert werden.

Die Schaltung weist zudem zwei weitere Speicherzellen 108, 110 (A' und B') auf, in welche die Inhalte der Speicherzellen 104, 106 (A und B) als Werte ushk1' bzw. ushk2' kopiert werden, und zwar der Inhalt der Speicherzelle A nach A' und der Inhalt der Speicherzelle B nach B'.

Insbesondere weist die Schaltung ein Diagnosemodul 112 zur Auswertung der in den Speicherzellen 108, 110 (A' und B') abgelegten Spannungssignale ushk1' und ushk2' auf. Die Auswertung besteht zunächst in einer Plausibilitätsprüfung, bei der eine Erkennung durchgeführt wird, ob eine Vertauschung der beiden Sonden 28, 30 (LSF1 und LSF2) vorliegt. Die Erkennung beruht insbesondere darauf, dass jedes Spannungssignal entsprechend dem Einbauort der zugehörigen Sonde 28, 30 eine spezifische Charakteristik, d.h. Spannungsverlauf und Spannungsniveau, aufweist. Diese an sich bekannten Charakteristika werden den Speicherzellen 108, 110 (A' und B') jeweils fest zugeordnet, so dass die Vertauschungserkennung mittels eines einfachen Vergleichs dieser Charakteristika erfolgen kann.

Im Falle der Erkennung einer Vertauschung wird von dem Diagnosemodul 112 ein sogenanntes "Vertauschbit" 114 gesetzt, welches die Vertauschung anzeigt, jedoch nicht zum Setzen einer Fehlermeldung verwendet wird. Vielmehr wird mittels zweier Umschalter 116, 118, jeweils getriggert durch das Vertausch-Bit 114, ein Umkopieren der Inhalte der Speicherzelle 104 (A) auf die Speicherzelle 110 (B') und der Speicherzelle 106 (B) auf die Speicherzelle 108 (A') durchgeführt. Dadurch werden der Wert ushk1' durch ushk2 und der Wert ushk2' durch ushk1 ersetzt. Im Ergebnis liegen demnach in den Speicherzellen 108, 110 (A' und B') wieder die korrekten, d.h. aufgrund Ihrer Spannungscharakteristik diesen Speicherzellen A' und B' richtig zugeordneten Spannungssignale vor.

Mittels der beschriebenen Umschaltung kann im weiteren Verlauf der im Zusammenhang mit der Lambdaregelung bzw. der Kat-Diagnose in an sich bekannter Weise durchgeführten Spannungsauswertung mit korrekten Werten gerechnet werden, obwohl von den Sondensteckern her eine bleibende Vertauschung vorliegt.

Es ist anzumerken, dass die in der Fig. 2 gezeigte Schaltung bevorzugt in einem Motorsteuergerät, bspw. in der von der vorliegenden Anmelderin entwickelten "Motronic", realisiert wird. Ein entsprechendes Steuerprogramm kann dabei in Form einer die vorbeschriebene Funktionalität realisierenden Software oder in Form einer fest verdrahteten Schaltung implementiert sein. Anstelle der in der Fig. 2 gezeigten Umschalter können alternativ an sich bekannte elektronische Schalter wie Transistorschalter oder elektro-mechanische Schalter wie Relais eingesetzt werden.

Es versteht sich ferner, dass die Erfindung prinzipiell auch zum Vertauschschutz anderer Sondentypen als den vorbeschriebenen LSF-Sonden dienen kann, sofern diese ebenfalls eine vorgenannte Spannungscharakteristik aufweisen. Auch kann sie zum Vertauschschutz bei mehr als zwei Sonden entsprechend angewendet werden. Ferner ist die Erfindung generell im Bereich der Abgasnachbehandlung (auch bei Dieselmotoren und zur Lambdamessung bei Gasmotoren) mittels der genannten Messsonden einsetzbar, also nicht nur im Bereich der Kraftfahrzeugtechnik, wie oben beschrieben.

## Patentansprüche

1. Verfahren zum Einbauvertauschschutz wenigstens zweier Messsonden (28, 30) zur Erfassung physikalisch/chemischer Größen eines Abgases in einer Einrichtung (10) zur Abgasnachbehandlung in einer Brennkraftmaschine insbesondere eines Kraftfahrzeuges, **dadurch gekennzeichnet, dass** Spannungssignale (U_LSF1, U_LSF2) der wenigstens zwei Messsonden (28, 30) eingelesen werden, dass die eingelesenen Spannungssignale digitalisiert und die digitalisierten Spannungswerte zwischengespeichert werden, dass die zwischengespeicherten Spannungswerte anhand charakteristischer Spannungsgrößen ausgewertet werden und dabei geprüft wird, ob eine Vertauschung der wenigstens zwei Messsonden (28, 30) vorliegt, und dass, in Abhängigkeit von dem Prüfergebnis, die zwischengespeicherten Spannungswerte gegeneinander vertauscht und erneut zwischengespeichert werden.

2. Verfahren nach Anspruch 1, dass die zwischengespeicherten digitalisierten Spannungswerte zusätzlich jeweils in Kopie zwischengespeichert werden, dass die in Kopie zwischengespeicherten Spannungswerte anhand der charakteristischen Spannungsgrößen ausgewertet werden und dabei geprüft wird, ob eine Vertauschung der wenigstens zwei Messsonden (28, 30) vorliegt, und dass, in Abhängigkeit von dem Prüfergebnis, die zwischengespeicherten Spannungswerte vertauscht und jeweils in Kopie zwischengespeichert werden.

3. Verfahren nach Anspruch 1 oder 2, **dadurch gekennzeichnet, dass** die zwischengespeicherten oder in Kopie zwischengespeicherten Spannungswerte anhand einer den Spannungssignalen entsprechend dem Einbauort der jeweils zugehörigen Messsonde (28, 30) spezifischen Charakteristik ausgewertet werden.

4. Verfahren nach Anspruch 3, **dadurch gekennzeichnet, dass** die spezifische Charakteristik durch den Spannungsverlauf und das Spannungsniveau der jeweiligen Messsonde gegeben ist.

5. Verfahren nach einem der Ansprüche 2 bis 4, **dadurch gekennzeichnet, dass** die in Kopie zwischengespeicherten Spannungswerte in wenigstens zwei Speicherzellen (108, 110) abgelegt und die spezifischen Charakteristika den wenigstens zwei Speicherzellen (108, 110) fest zugeordnet werden.

6. Verfahren nach einem der vorhergehenden Ansprüche, **dadurch gekennzeichnet, dass**, in Abhängigkeit von dem Prüfergebnis, ein Vertauschbit (114) gesetzt wird, mittels dessen wenigstens zwei Umschalter (116, 118) zur Vertauschung der zwischengespeicherten Spannungswerte kreuzweise beschaltet werden.

7. Schaltung zum Einbauvertauschschutz wenigstens zweier Messsonden (28, 30) zur Erfassung physikalisch/chemischer Größen eines Abgases in einer Einrichtung (10) zur Abgasnachbehandlung in einer Brennkraftmaschine insbesondere eines Kraftfahrzeuges, **dadurch gekennzeichnet, dass** die Schaltung gemäß dem Verfahren nach einem der vorhergehenden Ansprüche arbeitet.

8. Schaltung nach Anspruch 7, **gekennzeichnet durch** Mittel (100, 102) zum Einlesen von Spannungssignalen (U_LSF1, U_LSF2) der wenigstens zwei Messsonden (28, 30), Analog/Digital-Wandlermittel zur Digitalisierung der eingelesenen Spannungssignale, Speichermittel (108, 110) zur Zwischenspeicherung der digitalisierten Spannungswerte, Diagnosemittel (112) zur Auswertung der in dem Speichermittel (108, 110) abgelegten Spannungssignale anhand charakteristischer Spannungsgrößen und zur Prüfung, ob eine Vertauschung der wenigstens zwei Messsonden (28, 30) vorliegt, sowie Umschaltmittel (116, 118) zur Vertauschung der in dem Speichermittel (108, 110) abgelegten Spannungswerte, in Abhängigkeit von dem Prüfergebnis.

9. Schaltung nach Anspruch 8, **dadurch gekennzeichnet, dass** als Umschaltmittel (116, 118) ein elektronischer oder elektromechanischer Umschalter oder ein die Umschaltung bewirkendes Steuerprogramm vorgesehen ist.

10. Schaltung nach Anspruch 7, **gekennzeichnet durch** Mittel (100, 102) zum Einlesen von Spannungssignalen (U_LSF1, U_LSF2) der wenigstens zwei Messsonden (28, 30), Analog/Digital-Wandlermittel zur Digitalisierung der eingelesenen Spannungssignale, wenigstens zwei erste Speicherzellen (104, 106) zur Zwischenspeicherung der digitalisierten Spannungswerte, wenigstens zwei zweite Speicherzellen (108, 110) zur Zwischenspeicherung von Kopien der Inhalte der wenigstens zwei ersten Speicherzellen (104, 106), Diagnosemittel (112) zur Auswertung der in den wenigstens zwei zweiten Speicherzellen (108, 110) abgelegten Spannungssignalen anhand charakteristischer Spannungsgrößen und zur Prüfung, ob eine Vertauschung der wenigstens zwei Messsonden (28, 30) vorliegt, und zur Veranlassung einer kreuzweisen Vertauschung der in den wenigstens zwei ersten Speicherzellen (104, 106) und den wenigstens zwei zweiten Speicherzellen (108, 110) abgelegten Spannungswerte, in Abhängigkeit von dem Prüfergebnis.

11. Schaltung nach einem der Ansprüche 8 bis 10, **dadurch gekennzeichnet, dass** die charakteristischen Spannungsgrößen den wenigstens zwei zweiten Speicherzellen (108, 110) fest zugeordnet sind.

12. Schaltung nach einem der Ansprüche 8 bis 11, **dadurch gekennzeichnet, dass** wenigstens zwei, mit den wenigstens zwei ersten Speicherzellen (104, 106) und den wenigstens zwei zweiten Speicherzellen (108, 110) verbundene Umschalter (116, 118) angeordnet sind und dass das Diagnosemittel (112), bei erkannter Vertauschung, ein Vertauschbit (114) setzt, welches die wenigstens zwei Umschalter (116, 118) dazu veranlasst, ein kreuzweises Umkopieren der Inhalte der wenigstens zwei ersten Speicherzellen (104, 106) auf die wenigstens zwei zweiten Speicherzellen (108, 110) durchzuführen.

13. Steuergerät zur Steuerung einer Einrichtung (10) zur Abgasnachbehandlung in einer Brennkraftmaschine insbesondere eines Kraftfahrzeuges, aufweisend eine Schaltung nach einem der Ansprüche 7 bis 12.
